# EUROPÄISCHE PATENTSCHRIFT

(11) **EP 1 904 794 B1**
(45) Veröffentlichungstag und Bekanntmachung des Hinweises auf die Patenterteilung: **12.01.2011**
(21) Anmeldenummer: 06741639.6
(22) Anmeldetag: 12.06.2006
(51) Int. Cl.: F24F 13/14, F16K 31/04, A62C 2/24, B60H 1/00

(54) **STELLANTRIEB**
ACTUATOR
MECANISME DE COMMANDE

(30) Priorität: 14.07.2005 CH 11682005
(43) Veröffentlichungstag der Anmeldung: 02.04.2008
(73) Patentinhaber: Belimo Holding AG, 8340 Hinwil (CH)
(72) Erfinder: SCHMIDIG, Markus, 6440 Brunnen (CH); MARTHALER, Eduard, 8345 Adetswil (CH)
(74) Vertreter: Roshardt, Werner Alfred
(86) Internationale Anmeldenummer: PCT/CH2006/000314
(87) Internationale Veröffentlichungsnummer: WO 2007/006162

(56) Entgegenhaltungen:
- EP-A- 1 158 254
- EP-A- 1 460 352
- US-A- 5 169 121
- US-A- 5 758 684
- US-B1- 6 431 203

## Beschreibung

Die Erfindung bezieht sich auf einen Stellantrieb, insbesondere mit einem elektrischen Motor, und einem stark untersetzten Getriebe zur Übertragung eines Drehmoments auf eine Antriebswelle wenigstens einer Klappe oder wenigstens eines Ventils zur Regelung eines Gas- oder Flüssigkeitsvolumenstroms, insbesondere auf dem Gebiet Heizung-Lüftung- Klima (HLK), Brand- und Raumschutz, wobei der Stellantrieb direkt oder über einen Adapter in radialer Richtung verdrehsicher an einem Gerüst oder Support des betätigten Organs montierbar ist und mit der Antriebswelle einen lösbaren Kraft- und/oder Formschluss bildet. Weiter betrifft die Erfindung eine Verwendung des Stellantriebs.

Elektrisch betätigbare Stellantriebe für die Motorisierung von Stellgliedern in Heizungs-, Lüftungs- und Klimaanlagen (HLK-Anlagen) werden seit mehr als 30 Jahren hergestellt. HLK-Stellglieder gewährleisten eine wirtschaftliche Volumenstromregelung von Gasen oder Flüssigkeiten, insbesondere von Luft und Wasser. Als kompakte Einheit umfassen die HLK-Stellglieder in der Regel nicht nur den Antrieb, sondern auch Druckfühler und Regler, alles in einem Gerät vereinigt.

Belüftungssysteme werden zunehmend in Gebäuden, insbesondere Wohn-, Büro-, Gewerbe- und Industriebauten, eingesetzt, in der Regel kombiniert mit Brand- und Rauchschutzeinrichtungen. In Belüftungsanlagen spielt die Volumenstromregelung mit schwenkbaren Luftklappen eine wesentliche Rolle. Der Volumenstrom wird mit einem geeigneten Messinstrument gemessen, beispielsweise mit dem als kompakte Einheit von Antrieb, Druckfühler und Regler ausgebildeten NMV-D2M der Belimo Automation AG, CH-8340 Hinwil, und die Messwerte an eine Elektronik weitergegeben.

Zum Betätigen einer Klappe in einem Belüftungssystem oder eines Kugelhahns in einem Wasserleitungssystem müssen verhältnismässig schwache Motoren grossflächige oder grossvolumige Regelorgane betätigen. Eine präzise und stabile Verstellung ist nur mit einer überaus starken Untersetzung möglich. Für das Schwenken einer Klappe oder das Drehen eines Kugelhahns um einen spitzen bis rechten Winkel sind zahlreiche Umdrehungen der Primärwelle des Elektromotors notwendig. In einem Stellantrieb wird das untersetzte Drehmoment des Motors in eine Schwenk- oder Linearbewegung umgesetzt.

Im schweizerischen Patentgesuch Nr. 01448/04 wird ein Stellantrieb für die lineare Betätigung einer Vorrichtung beschrieben, welche unter Umsetzung des Drehmoments eines elektromotorisch angetriebenen Ritzels eine längsverschiebbare Tangentialstange betätigt. Diese betätigt ihrerseits ein Klappe oder ein Ventil auf dem Gebiet HLK, Brand- und Rauchschutz. Eine individuell regelbare, in ihrer Axialrichtung verschiebbaren Norrngewindestange ist verdrehsicher im Stellantrieb gehaltert. Das Ritzel steht mit wenigstens einem frei drehbaren Treibrad in Formschlüssigem Eingriff. Ein federndes Andruckorgan bewirkt ein spielfreies Kämmen von Treibrädern und Normgewindestangen.

Die EP 1 158 154 A1 (Twitoplast Ltd.) beschreibt einen Stellantrieb, welche über einen Adapter am Ende einer Stellachse in radialer Richtung verdrehsicher montiert werden kann und mit der Antriebswelle einen lösbaren Formschluss bildet.

Die Erfinder haben sich die Aufgabe gestellt, einen Stellantrieb der eingangs genannten Art zu schaffen, welcher die Betätigung der Antriebswelle vereinfacht und flexibilisiert, auch für die Nachrüstung bestehender Anlagen.

Die Aufgabe wird erfindungsgemäss dadurch gelöst, dass der Stellantrieb selbst oder der Adapter wenigstens einen stirnseitigen Einschubschlitz für die Antriebswelle aufweist, welcher Schlitz im wesentlichen U- oder halbkreisförmig ist. Spezielle und weiterbildende Ausführungsformen des Stellantriebs sind Gegenstand von hängigen Patentansprüchen. Die Antriebswelle kann verhältnismässig kurz ausgebildet sein und ein einziges Regelorgan, wie eine Klappe oder ein Ventil, betätigen. Die Antriebswelle kann jedoch auch länger ausgebildet sein und gleichzeitig mehrere Regelorgane betätigen. Auch eine lange Antriebswelle kann mit einem einzigen Regelorgan betätigt werden. Zur Auswechslung eines Stellantriebs müssen lediglich die einem einzigen Regelorgan betätigt werden. Zur Auswechslung eines Stellantriebs müssen lediglich die Befestigungsschrauben und der Kraft- und/oder Formschluss an der Antriebswelle gelöst werden. Der neu einzusetzende Stellantrieb muss nicht an derselben Stelle montiert werden wie der zu reparierende oder zu ersetzende, so kann das Auswechseln praktisch ohne Betriebsunterbruch erfolgen, es sind nur wenige Sekunden notwendig.

Wie später im Detail gezeigt, ist für Neumontagen oder zum Nachrüsten vorzugsweise ein Adapter auf einer Basisplatte befestigt, welche zweckmässig auch den Stellantrieb verdrehsicher haltert.

Der seitliche Anschluss erfolgt mittels eines stirnseitig am Stellantrieb oder am Adapter angebrachten, U-förmigen oder halbkreisförmigen Schlitz, in welchen die Antriebswelle mit wenig Spiel passt. Die Reaktionskraft des Stellantriebs wird von der gemeinsamen Basisplatte bzw. von deren Verlängerung aufgenommen.

Der Kraft- und/oder Formschluss zwischen der Getriebewelle des Stellantriebs oder dem Adapter einerseits und der Antriebswelle andererseits erfolgt in an sich bekannter Weise, beispielsweise über
- einen Klemmbügel, vorzugsweise mit Querrillen für einen Formschluss,
- zwei formschlüssig ineinander greifende Stirnzahnräder bzw. Zahnradsegmente, oder
- eine im Querschnitt kreissegmentförmige Getriebe-Hohlwelle mit einer Innenzahnung, die nach dem radialen Einschieben und Fixieren des Stellantriebs bzw. des Adapters mit einer Aussenzahnung der Antriebswelle in formschlüssigem Eingriff steht.

Das Fixieren des Stellantriebs bzw. des Adapters zur Bildung des Kraft- und/oder Formschlusses mit der Antriebswelle erfolgt in der Regel durch Verschrauben an einem Gerüst oder Support der HLK-Anlage. Dies muss verdrehsicher erfolgen, die Reaktionskraft des Antriebs muss absorbiert werden. Im Bereich jeder Antriebswelle sind zweckmässig wenigstens zwei Positionen vorgesehen, wo ein Stellantrieb, mit oder ohne Adapter, verschraubt werden kann. Nach einer speziellen Ausführungsform der Erfindung kann der Stellantrieb auch auf eine Schnappvorrichtung aufgesteckt werden und ist sofort funktionsbereit. Dieser kann vor allem bei einem Betriebsausfall eines Antriebsmotors aufgesteckt und verzugsfrei in Betrieb genommen werden. Wenn der Stellantrieb und der Adapter auf einer gemeinsamen Grundplatte angeordnet sind, muss nur diese befestigt bzw. aufgeschnappt werden.

Als besonders vorteilhaft hat sich ein Adapter in Form eines Parallelogramms erwiesen, wobei ein Getriebejoch und ein Antriebsjoch über parallele Zugstangen gelenkig verbunden sind. Über eine Getriebe-Ausgangswelle wird das anzuwendende Drehmoment auf das Getriebejoch übertragen und von dort über die Zugstangen an das Antriebsjoch weitergegeben, welches das Drehmoment kraft- und/oder formschlüssig an die Antriebswelle übergibt. In diesem Fall benötigt weder der Antrieb noch der Zusatz ein Lager.

Der erfindungsgemässe Stellantrieb kann überall verwendet werden, wo ein solcher benötigt wird. Der Antrieb der Regelorgane, insbesondere Klappen oder Ventile, erfolgt einzeln oder gruppenweise durch eine gemeinsame durchgehende Antriebswelle.

Der seitliche Anschluss eines Stellorgans kann an jedem Ort einer einzelnen oder gemeinsamen Antriebswelle erfolgen, wo das Stellorgan am Gerüst oder an einem Support der HLK-Anlage erfolgen kann.

Eine besondere Verwendungsform des erfindungsgemässen Stellantriebs besteht im fliegenden Einsatz. Falls irgendwo ein Motor eines Stellantriebs ausfällt, kann an anderer Stelle der Antriebswelle ein fertiger Stellantrieb angeschraubt oder mit einem Schnappmechanismus in Radialrichtung eingefahren und fixiert werden.

Der erfindungsgemässe, in radialer Richtung montierbare Stellantrieb kann einfacher und rascher an einer beliebigen oder vorgegebenen Stelle an der durchgehenden Antriebswelle montiert werden, er weist bezüglich der Platzierung eine höhere Flexibilität auf. Stellantriebe bestehender Anlagen können durch den Einbau eines Adapters nachgerüstet werden. Betätigt wird der Stellantrieb insbesondere von einem Motor. Bevorzugt ist der Einsatz eines Elektromotors, zweckmässig eines Steckmotors. In bestimmten Fällen können pneumatische oder hydraulische Antriebsmotoren zweckdienlich sein. Auch ein manueller Antrieb ist nicht ausgeschlossen.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine perspektivische Darstellung eines Stellantriebs mit teilweise sichtbarem Adapter,
- Fig.2 eine perspektivische Ansicht eines Stellantriebs,
- Fig.3 eine perspektivische Ansicht eines Stellantriebs mit Adapter,
- Fig:4 eine aufgeschnittene Ansicht eines Stellantriebs,
- Fig.5 eine aufgeschnittene Ansicht eines Stellantriebs mit Adapter, und
- Fig.6 ein Umsetzungsmechanismus eines Adapters mit einem Parallelogramm.

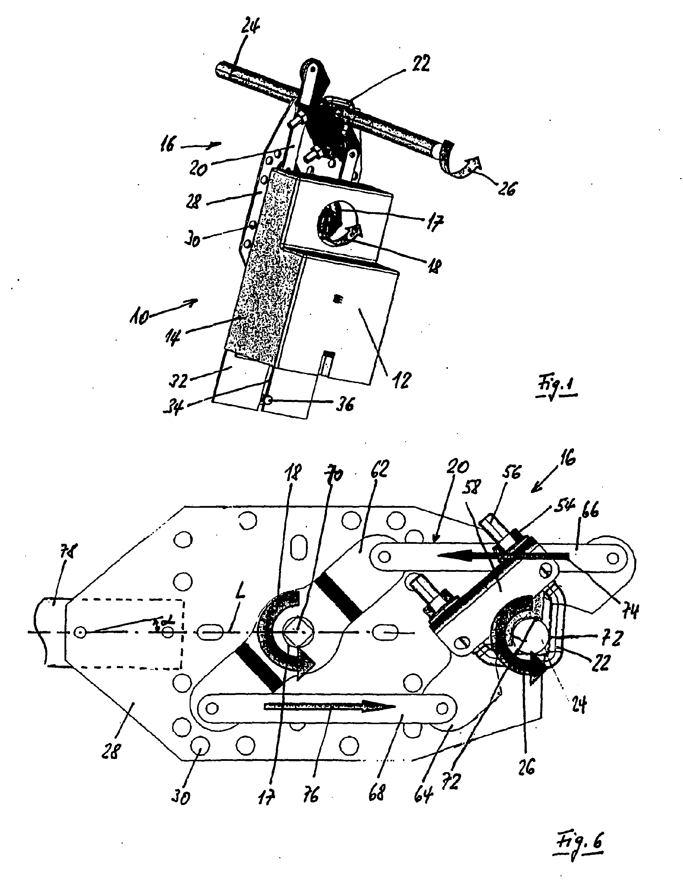

Ein in Fig. 1 dargestellter Stellantrieb 10 umfasst im wesentlichen ein Motorgehäuse 12 und ein Getriebegehäuse 14, die in einem gemeinsamen Gehäuse angeordnet sind. Das Reduktionsgetriebe reduziert mehrere hundert Umdrehungen der Primärwelle des Elektromotors auf einen Bruchteil einer Umdrehung der Getriebe-Ausgangswelle 17, was durch einen Pfeil 18 angedeutet ist. Diese Schwenkbewegung wird durch den im wesentlichen als Parallelogramm 20 ausgebildeten Adapter 16 mit einem Klemmbügel 22 auf eine durchgehende Antriebswelle 24 übertragen, welche durch die übernommenen Schwenkbewegungen das Öffnen und Schliessen von Klappen oder Ventilen auslöst. Diese Schwenkbewegung ist mit einem Pfeil 26 charakterisiert, welcher in der gleichen Drehrichtung wie Pfeil 18 verläuft.

Der im wesentlichen ein Parallelogramm 20 umfassende Adapter 16 ist schwenkbar auf einer Grundplatte 28 gehaltert, welche ihrerseits über Montagelöcher 30 mit einem Gerüst oder Support des betätigten Organs verschraubbar ist.

Der Stellantrieb 10 ist ebenfalls mit der Grundplatte 28 des Adapters 16 bzw. mit einer Verlängerung (78 in Fig. 6) davon verschraubt. Die Basisplatte des Stellantriebs 10 weist eine Verlängerung 32 mit einem längsmittigen Schlitz 34 auf. In diesem Schlitz 34 ist ein Bolzen 36 der nicht dargestellten Verlängerung der Grundplatte 28 geführt. Der Stellantrieb 10 ist derart verdrehsicher aufgebracht. Die Reaktionskraft des Antriebs wird unter günstigen Hebel Verhältnissen aufgenommen.

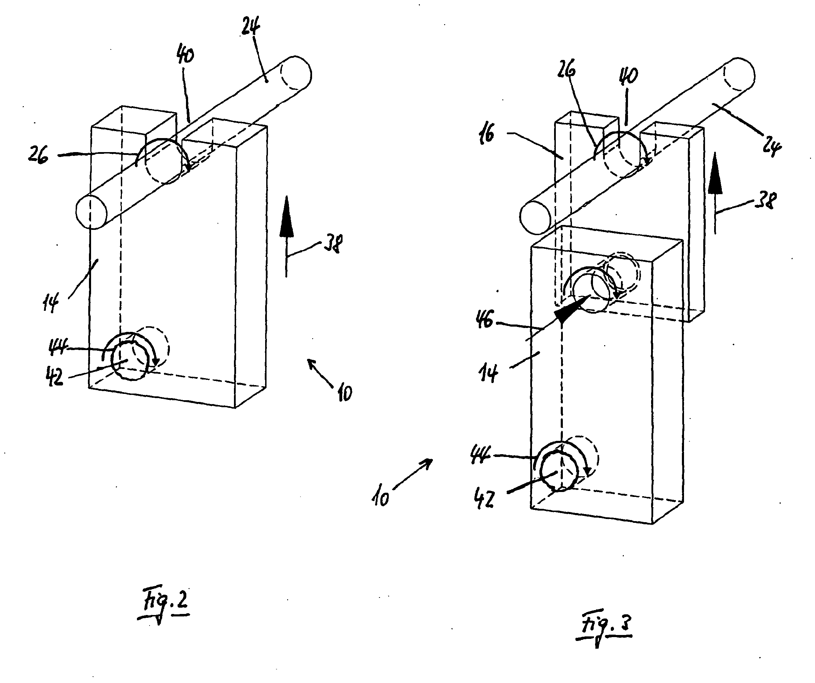

In Fig. 2 ist das Getriebegehäuse 14 eines Stellantriebs 10 (Fig. 1) dargestellt, welches in Richtung des Pfeils 38 in radialer Richtung auf eine durchgehende Antriebswelle 24 gesteckt und mit nicht dargestellten Mitteln verdrehsicher fixiert ist. Das Getriebegehäuse 14 hat stirnseitig einen U-förmigen Schlitz 40, in welchen die Antriebswelle 24 mit wenig Spiel passt. Der U-förmige Schlitz 40 kann auf eine halbzylinderförmige Öffnung reduziert sein. Die Drehrichtung der Antriebswelle 24 ist mit einem Pfeil 26 dargestellt.

Einfachheitshalber nicht gezeigt sind die Mittel zur kraft- oder formschlüssigen Übertragung des Drehmoments der Getriebe-Ausgangswelle 17 (Fig. 1) auf die Antriebswelle 24. Vorliegend weist diese mindestens im Bereich des Reduktionsgetriebes eine Aussenzahnung auf. Beim Aufstecken und Fixieren des Reduktionsgetriebes 14 greift die Aussenzahnung der Getriebe-Ausgangswelle 17 formschlüssig in die Aussenzahnung der Antriebswelle 24 ein.

Im unteren Bereich ist im Getriebegehäuse 14 eine Öffnung 42 für die Primärwelle des Steckmotors 60 (Fig. 1) vorgesehen. Diese Primärwelle hat ebenfalls eine Aussenzahnung, welche nach dem Einführen des Steckmotors 60 mit einem Zahnrad des Untersetzungsgetriebes in formschlüssigem Eingriff steht. Der Antrieb durch eine Primärwelle des Steckmotors 60 ist mit einem Pfeil 44 charakterisiert.

Nach der Ausführungsform von Fig. 3 ist das Getriebegehäuse 14 mit der Getriebe-Ausgangswelle 17 auf einen Adapter 16 gesteckt. Dieser folgt in Richtung des Pfeils 46, welcher parallel zur Antriebswelle 24 verläuft. Der U-förmige Schlitz 40 zum Aufstecken auf die Antriebswelle 24 in radialer Richtung ist stirnseitig im Adapter 16 angebracht. Der Adapter 16 überträgt das auf die Antriebswelle 24 auszuübende Drehmoment für das Reduktionsgetriebe, im Getriebegehäuse 14 ist kein U-förmiger Schlitz 40 mehr notwendig. Dank des Adapters 16 können auch eingebaute Stellantriebe 10 umgerüstet werden, ohne dass komplizierte maschinelle Bearbeitungsverfahren notwendig sind.

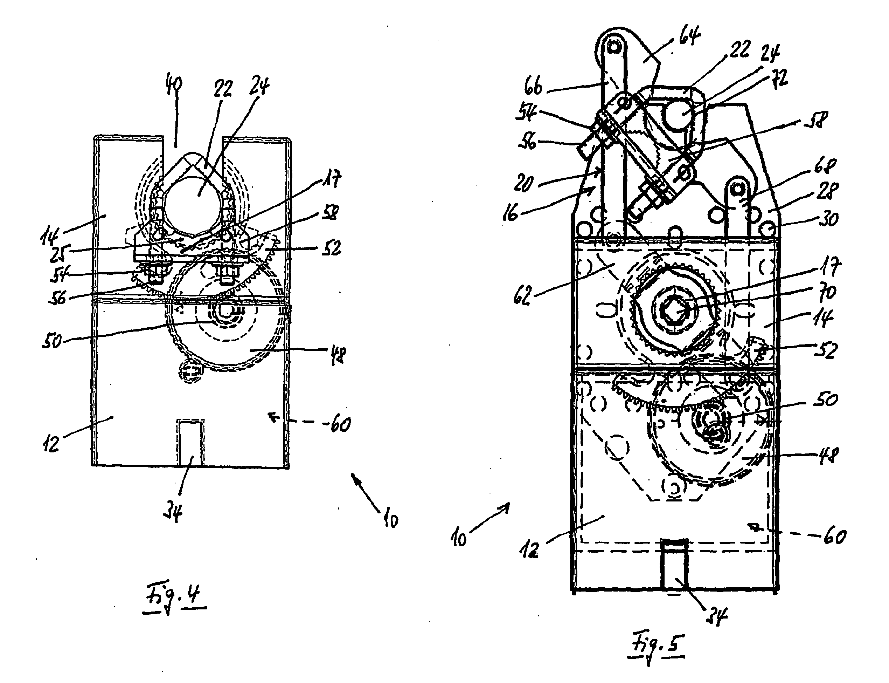

Fig. 4 und 5 zeigen im wesentlichen das Innere von Fig. 2 und 3. Der Übersichtlichkeit wegen ist in Fig. 4 im Motorgehäuse 12 nichts eingezeichnet, dessen Aufbau entspricht einem üblichen Steckmotor 60. Im Getriebegehäuse 14 ist ein Teil des Reduktionsgetriebes 48 erkennbar. Auf einer Getriebewelle ist ein Ritzel 50 angeordnet, dessen Aussenzahnung greift in ein Zahnsegment 52 mit wesentlich grösserem Radius ein. Dieses Zahnsegment 52 hat einen verhältnismässig kleinen Schwenkbereich von etwas über 90°. Es betätigt die Getriebeausgangswelle 17, welche über einen Klemmbügel 22 im kraft- und formschlüssigen Eingriff mit der Antriebswelle 24 für die Regelorgane steht.

Die die Klemmkraft bewirkenden Schrauben 54 auf den Schenkeln 56 des Klemmbügels 22 sind gegen eine Schulter 58 des Zahnsegmentes 52 oder eines Zwischenstücks einstellbar verspannt.

Fig. 5 zeigt einen Adapter 16 entsprechend Fig. 3, der im wesentlichen aus einem Parallelogramm 20 besteht. Dieses Parallelogramm 20 verläuft in Längsrichtung der Grundplatte28, es besteht aus einem Getriebejoch 62, einem Antriebsjoch 64 und zwei die beiden Joche gelenkig verbindenden Zugstangen 66, 68.

Das Getriebejoch 62 ist drehbar mit der Grundplatte 28 und fest mit einer mehreckigen Welle 70, welche senkrecht zur Grundplatte 28 verläuft, verbunden.

Vorliegend ist die Welle 70 im Querschnitt quadratisch ausgebildet, sie kann auch einen andern, jedoch nicht runden Querschnitt haben, z.B. dreieckig, sechseckig oder rund mit einer Abflachung. Die Welle 70 wird in die Getriebeausgangswelle 17 mit einem entsprechenden Hohlraum zur Bildung eines Formschlusses gesteckt.

Das Antriebsjoch 64 weist längsmittig gegen aussen eine knapp kreisförmige Aufsparung auf, welche etwa dem U-förmigen Schlitz 40 in der Grundplatte 28 entspricht. Weiter ist eine Lasche des Antriebsjochs 64 zweimal etwa rechtwinklig abgekantet und bildet so eine Schulter 58 für die Befestigung des Klemmbügels 22. Die Schenkel 56 des Klemmbügels 20 weisen ein Aussengewinde auf, zwei Schraubenmuttern 54 mit Unterlegscheibchen ziehen den Klemmbügel fest auf die eingesetzte Antriebswelle und bilden einen Kraftschluss.

Fig. 6 zeigt einen Adapter 16, im wesentlichen ein auf einer Grundplatte 28 montiertes Parallelogramm 20 mit einem auf eine Antriebswelle 24 kraft- und formschlüssig einwirkenden Klemmbügel 22. Die Getriebe-Ausgangswelle 17 überträgt ein Drehmoment auf die im Querschnitt quadratische Welle 70, welche ihrerseits einen Formschluss zum Getriebejoch 62 des Parallelogramms 20 bildet. Die durch den Pfeil 18 charakterisierte Drehbewegung wird von zwei gelenkig mit dem Getriebejoch 62 verbundenen, parallelen Zugstangen 66, 68 auf das Antriebsjoch 64 übertragen. An einer mit dem Antriebsjoch 64 einstückig ausgebildeten, doppelt rechtwinklig abgekanteten Schulter 58 ist der Klemmbügel 22 verschraubt, die beiden Schenkel 56 mit einem Aussengewinde können über Schraubenmuttern 54 angezogen werden. Dadurch wird der Klemmbügel 22 auf die Antriebswelle 24 gedrückt und bildet einen Kraftschluss. Querrillen 72 am Klemmbügel 22, in der Aussparung im Antriebsjoch 64 und in einer Aussparung der Schulter 58 erlauben neben dem Kraft- auch einen mindestens teilweisen Formschluss.

Falls sich das Getriebejoch 62 und das Antriebsjoch 64 in Richtung der Pfeile 18, 26 bewegen, führen die beiden Zugstangen 66,68 eine durch Pfeile 74,76 charakterisierte gegenläufige Parallelbewegung zur teilweise eingezeichneten Längsachse L der Grundplatte aus. Die Achse der Antriebswelle 24 schneidet die Längsachse L. Nach nicht gezeichneten Ausführungsformen kann die Grundplatte 28 so montiert sein, dass die Antriebswelle 24 ausserhalb der Längsachse L liegt. Die Zugstangen 66,68 verlaufen dann in einem Winkel α zur Längsachse L, wobei der Winkel α bis +/- 90° oder mehr betragen kann.

Eine nur teilweise dargestellte Verlängerung 78 der Grundplatte 28 erlaubt eine zusätzliche Befestigung des Getriebegehäuses 14 (Fig. 1-3) zur besseren Absorbierung der Reaktionskraft des auf die Antriebswelle 24 ausgeübten Drehmoments, der Stellantrieb 10 ist verdrehsicher montiert.

## Patentansprüche

1. Stellantrieb (10), insbesondere mit einem elektrischen Motor (60) und einem stark untersetzten Getriebe (48) zur Übertragung eines Drehmoments auf eine Antriebswelle (24) wenigstens einer Klappe oder wenigstens eines Ventils zur Regelung eines Gas- oder Flüssigkeitsvolumenstroms, insbesondere auf dem Gebiet Heizung- Lüftung-Klima (HLK), Brand- und Raumschutz, wobei der Stellantrieb (10) direkt oder über einen Adapter (16) in radialer Richtung verdrehsicher an einem Gerüst oder Support des betätigten Organs montierbar ist und mit der Antriebswelle (24) einen lösbaren Kraft und/oder Formschluss bildet, **dadurch gekennzeichnet, dass** der Stellantrieb (10) selbst oder der Adapter (16) wenigstens einen stirnseitigen Einschubschlitz (40) für die Antriebswelle (24) aufweist, welcher Schlitz (40) im wesentlichen U- oder halbkreisförmig ist.

2. Stellantrieb (10) nach Anspruch 1, **dadurch gekennzeichnet, dass** er eine in Richtung des Einschubschlitzes (40) offene, rohrsegmentförmige Getriebe- Ausgangswelle (17) mit einer Innenzahnung aufweist, die nach dem radialen Einschieben und Fixieren des Stellantriebs (10) mit einer Aussenzahnung der Antriebswelle (24) oder einem mit der Antriebswelle (24) verbundenen Rohrsegment (25) in formschlüssigem Eingriff steht.

3. Stellantrieb (10) nach einem der Ansprüche 1 oder 2, **dadurch gekennzeichnet, dass** das Fixieren des Stellantriebs (10) bzw. des Adapters (16) zur Bildung des Kraft- und/oder Formschlusses mit der Antriebswelle (24) durch eine Verschraubung oder mit einem Schnellverschluss mit dem Gerüst oder einem Support des betätigten Organs erfolgt.

4. Stellantrieb (10) nach einem der Ansprüche 1 bis 3, **dadurch gekennzeichnet, dass** der Adapter 16 ein auf einer Grundplatte (28) montiertes Parallelogramm (20) umfasst, welches ein vom Stellantrieb (10) betätigbares Getriebejoch (62), ein Antriebsjoch (64) für die Antriebswelle (24) und zwei parallele, mit den Enden der beiden Joche (62, 64) gelenkig verbundene Zugstangen (66, 68) umfasst, wobei das Getriebejoch (62) mit der Getriebe-Ausgangswelle (17) und das Antriebsjoch (64) mit der Antriebswelle (24) form- und/oder kraftschlüssig verbunden ist.

5. Stellantrieb (10) nach Anspruch 4, **dadurch gekennzeichnet, dass** das Getriebejoch (62) des Parallelogramms (20) formschlüssig von einer nicht rund ausgebildeten Getriebewelle (70) durchgriffen ist, welche in der Grundplatte (28) drehbar verankert ist.

6. Stellantrieb (10) nach Anspruch 4 oder 5, **dadurch gekennzeichnet, dass** das Antriebsjoch (64) eine in dessen Längsrichtung doppelt rechtwinklig abgekantete Schulter (58) umfasst, welche von den Schenkeln (56) eines die Antriebswelle (24) kraftschlüssig und teilweise formschlüssig fixierenden Klemmbügels (22) durchgriffen ist, wobei dessen Schenkel (56) mit Schraubenmuttern (54) befestigt sind.

7. Stellantrieb (10) nach einem der Ansprüche 1 bis 6, **dadurch gekennzeichnet, dass** dieser auch an einer Verlängerung (78) der Grundplatte (28) für den Adapter (16) verdrehsicher montiert, vorzugsweise verschraubt, ist.

8. Stellantrieb (10) nach einem der Ansprüche 1 bis 7, **dadurch gekennzeichnet, dass** die Zugstangen (66, 68) des Parallelogramms (20) in Längsrichtung L der Grundplatte (28) verlaufen oder in einem Winkel (α) bis etwa 90° nach der einen oder anderen Seite abgewinkelt sind.

9. Verwendung des Stellantriebs (10) nach einem der Ansprüche 1 bis 8 als temporär einsetzbarer Überbrückungsantrieb an einer vorgegebenen Stelle einer Antriebswelle 24 für mehrere Regelorgane, insbesondere Klappen oder Ventile.

## Claims

1. Actuator (10), in particular with an electric motor (60) and a highly reduced gearing (48) for transmitting a torque to a drive shaft (24) of at least one flap or at least one valve for controlling a gas or liquid volume flow, in particular in the area of heating, ventilation, air conditioning (HVAC), fire and area protection, wherein the actuator (10) can be fitted directly or by means of an adapter (16) so as to be secured against rotation in the radial direction on a frame or support of the actuated member and, with the drive shaft (24), forms a releasable force and/or positive connection, **characterised in that** the actuator (10) itself or the adapter (16) has at least one insertion slot (40) on the end face for the drive shaft (24), which slot (40) is substantially U-shaped or semi-circular.

2. Actuator (10) according to claim 1, **characterised in that** it has a pipe segment-shaped gearing output shaft (17), which is open in the direction of the insertion slot (40), with inner teeth, which, after the radial insertion and fixing of the actuator (10), are in positive engagement with outer teeth of the drive shaft (24) or a pipe segment (25) connected to the drive shaft (24).

3. Actuator (10) according to either of claims 1 or 2, **characterised in that** the fixing of the actuator (10) or the adapter (16), to form the non-positive and/or positive connection with the drive shaft (24), takes place by a screwing operation or with a rapid release fastener to the frame or a support of the actuated member.

4. Actuator (10) according to any one of claims 1 to 3, **characterised in that** the adapter (16) comprises a parallelogram (20), which is fitted on a base plate (28) and which comprises a gearing yoke (62) which can be actuated by the actuator (10), a drive yoke (64) for the drive shaft (24) and two parallel connecting rods (66, 68) connected in an articulated manner to the ends of the two yokes (62, 64), the gearing yoke (62) being connected to the gearing output shaft (17) and the drive yoke (64) being connected to the drive shaft (24), in a positive and/or non-positive manner.

5. Actuator (10) according to claim 4, **characterised in that** the gearing yoke (62) of the parallelogram (20) has a gearing shaft (70), which is not round, positively engaging through it, said gearing shaft being rotatably anchored in the base plate (28).

6. Actuator (10) according to claim 4 or 5, **characterised in that** the drive yoke (64) comprises a shoulder (58), which is bent twice at a right angle in the longitudinal direction thereof and which has the legs (56) of a clamp (22), which fixes the drive shaft (24) non-positively and partially positively, engaging through it, the legs (56) thereof being fastened with screw nuts (54).

7. Actuator (10) according to any one of claims 1 to 6, **characterised in that** the latter is also fitted, preferably screwed, in a manner secured against rotation, on an extension (78) of the base plate (28) for the adapter (16).

8. Actuator (10) according to any one of claims 1 to 7, **characterised in that** the connecting rods (66, 68) of the parallelogram (20) extend in the longitudinal direction L of the base plate (28) or are angled at an angle (α) of up to about 90° to one side or the other.

9. Use of the actuator (10) according to any one of claims 1 to 8 as a temporarily usable bridging drive at a predetermined point of a drive shaft (24) for a plurality of control members, in particular flaps or valves.

## Revendications

1. Mécanisme de commande (10) en particulier équipé d'un moteur électrique (60), et comprenant une transmission fortement démultipliée (48) pour communiquer un couple à un arbre primaire (24) d'au moins un volet ou d'au moins une vanne de régulation d'un flux volumétrique gazeux ou liquide, en particulier dans le domaine du chauffage, de l'aération, de la climatisation (Heizung-Lüftung-Klima, en abrégé HLK), de la sécurité incendie et de la sécurité des locaux, où le mécanisme de commande (10) peut être monté directement ou au moyen d'un adaptateur (16), sans rotation possible en direction radiale, sur un cadre ou support de l'organe actionné et est enclenché de façon détachable avec l'arbre primaire (24) en engagement positif ou par effet de force, **caractérisé en ce que** le mécanisme de commande (10) lui-même ou l'adaptateur (16) comporte au moins une fente frontale d'insertion (40) pour l'arbre primaire (24), cette fente (40) étant sensiblement en U ou en demi cercle.

2. Mécanisme de commande (10) selon la revendication 1, **caractérisé en ce qu'**il comporte un arbre de sortie (17) de transmission en forme de segment tubulaire, ouvert en direction de la fente d'insertion (40) et pourvu d'une denture interne qui est engrenée en engagement positif, après l'insertion radiale et la fixation du mécanisme de commande (10), avec une denture externe de l'arbre primaire (24) ou avec un segment tubulaire (25) assemblé avec l'arbre primaire (24).

3. Mécanisme de commande (10) selon la revendication 1 ou 2, **caractérisé en ce que** le mécanisme de commande (10) ou l'adaptateur (16) est fixé sur l'arbre primaire (24), pour l'enclenchement en engagement positif ou par effet de force, par vissage ou par une fermeture rapide avec le cadre ou un support de l'organe actionné.

4. Mécanisme de commande (10) selon l'une quelconque des revendications précédentes, **caractérisé en ce que** l'adaptateur (16) comprend un parallélogramme (20) qui est monté sur une plaque de base (28) et comprend un joug de transmission (62) actionnable par le mécanisme de commande (10), un joug primaire (64) pour l'arbre primaire (24), et deux tirants (66, 68) assemblés de façon articulée sur les extrémités des deux jougs (62, 64), le joug primaire (64) et le joug de transmission (62) étant respectivement assemblés en engagement positif ou par effet de force avec l'arbre primaire (24) et avec l'arbre de sortie (17) de transmission.

5. Mécanisme de commande (10) selon la revendication 4, **caractérisé en ce qu'**un arbre de transmission (70), de structure non ronde, qui est ancré à rotation dans la plaque de base (28), pénètre en engagement positif dans le joug de transmission (62) du parallélogramme (20).

6. Mécanisme de commande (10) selon la revendication 4 ou 5, **caractérisé en ce que** le joug primaire (64) comporte un épaulement (58) plié deux fois à angles droits dans sa direction longitudinale dans lequel pénètrent les branches (56) d'un étrier de serrage (22) qui fixe l'arbre primaire (24) par effet de force et partiellement en engagement positif et dont les branches (56) sont attachées par des écrous (54).

7. Mécanisme de commande (10) selon l'une quelconque des revendications précédentes, **caractérisé en ce que** celui-ci aussi est monté sans rotation possible, de préférence vissé, sur un prolongement (78) de la plaque de base (28) prévue pour d'adaptateur (16).

8. Mécanisme de commande (10) selon l'une quelconque des revendications précédentes, **caractérisé en ce que** les tirants (66, 68) du parallélogramme (20) s'étendent dans la direction longitudinale de la plaque de base (28) ou sont inclinées, sur l'un ou l'autre des côtés, d'un angle (α) qui peut atteindre environ 90°.

9. Utilisation du mécanisme de commande (10) selon l'une quelconque des revendications précédentes comme entraînement temporaire de pontage à un emplacement prédéfini d'un arbre primaire (24) prévu pour plusieurs organes de régulation, en particulier des volets ou des vannes.
